# EUROPEAN PATENT APPLICATION

(11) **EP 3 489 955 A1**
(43) Date of publication of application: **29.05.2019**
(21) Application number: 17306634.1
(22) Date of filing: 24.11.2017
(51) Int. Cl.: G11B 27/031, G11B 27/10, A63F 13/50, H04N 21/472, G11B 27/036, G11B 27/00

(54) **METHOD AND APPARATUS FOR INTERACTIVE VIDEOS**

(71) Applicant: THOMSON LICENSING, 92130 Issy les Moulineaux (FR)
(72) Inventor: DUMAS, Olivier, 35576 Cesson-Sévigné (FR); LEROY, Bertrand, 35576 Cesson-Sévigné (FR); DANIEAU, Fabien, 35576 Cesson-Sévigné (FR); LOPEZ, Thomas, 35576 Cesson-Sévigné (FR)
(74) Representative: Vidon Brevets & Stratégie

(57) **Abstract**

A method and an apparatus for interactive video playback is disclosed. Such an apparatus is configured for playing back a main video comprising at least one interaction element, and during playback of said main video:
- receiving a user interaction associated to said at least one interaction element,
- determining an interaction video sequence or a lighting variation picture associated to said at least one interaction element,
- adapting said main video using said interaction video sequence or said lighting variation picture, to deliver a composited interactive video,
- playing back said composited interactive video

## Description

### 1. Technical field

A method and an apparatus for interactive video design and playback are disclosed. Corresponding method and apparatus for creating interactive videos are further disclosed.

### 2. Background

Interactive videos are known to be videos wherein a user may be able to interact with the content presented in the video he is watching.

A known approach for interactive videos is based on multiple choices given to the user at an instant of the video sequence. For instance, a user watches linearly a first movie sequence and then chooses in a panel of videos a next movie sequence to play and so on. Such a choice can be an active (i.e. explicit) choice made by the user by selecting a movie sequence among several possibilities. Or the choice can be passive, for example the next movie sequence is automatically selected depending on an object or an area the user is looking at at the end of the first movie sequence.

In the domain of video games, interactive video is also proposed using specific animated zone inside a movie the user can launch with specific interactions.

When using only video media for interactive videos, there is no solution to give the user a way to deeply interact with elements inside the video. Using the method disclosed above, the user can only launch animation, i.e. another video sequence, but cannot play with the movie sequence's flow. For instance, if the user is able to interact with the door in the interactive movie (by clicking for example), this will launch a predefined movie where the user can see the door opening but the user is only a spectator of such an action of the door and cannot modify it once it had been launched.

Interactive solution can be brought by adding 3D information to the movie sequence. However, such a method asks for more computation time as it requires the use of a playback tool that is able to handle 3D elements. Furthermore, reaching the same visual quality as in a classical video is difficult, and sometimes almost impossible. It also requires the creation of the content to combine real time 3D elements with the current movie.

Therefore, there is a need for a new method providing interactive videos with low complexity.

### 3. Summary

A method for interactive video playback is disclosed. Such a method comprises:
- playing back a main video comprising at least one interaction element,
- during playback of said main video:
- receiving a user interaction associated to said at least one interaction element,
- determining an interaction video sequence or a lighting variation picture associated to said at least one interaction element,
- adapting said main video using said interaction video sequence or said lighting variation picture, to deliver a composited interactive video,
- playing back said composited interactive video.

According to an embodiment of the present principles, receiving a user interaction comprises capturing a movement of the user using an interaction device.

According to another embodiment of the present principles, the method for interactive playback further comprises determining at least one parameter associated to the captured movement of the user, said at least one parameter being taken into account when adapting said main video.

According to another embodiment of the present principles, determining at least one parameter comprises determining a speed of the captured movement of the user, and wherein adapting said main video comprises adapting a frame rate of said interaction video sequence according to said speed of the captured movement of the user and inserting said adapted interaction video sequence into said main video.

According to another embodiment of the present principles, said at least one interaction element is associated with an action, and determining at least one parameter associated to the captured movement of the user comprises determining, from the captured movement, a direction of the action applied to said at least one interaction element, and wherein adapting said main video comprises:
- if the determined direction corresponds to a direction opposite to the direction of the action represented in said interaction video sequence, inserting said interaction video sequence into said main video so that said interaction video sequence is played back reversely when said main video is played back forwardly.

According to another embodiment of the present principles, said at least one interaction element is associated with an action, and determining at least one parameter associated to the captured movement of the user comprises determining an amplitude of the captured movement, and wherein adapting said main video comprises adapting a duration of said interaction video sequence according to the amplitude of said captured movement and inserting said adapted interaction video sequence into said main video.

According to another embodiment of the present principles, said interaction video sequence or said lighting variation picture is received from a distant server or retrieved from a local memory.

According to another embodiment of the present principles, when said at least one interaction element is a light source, adapting said main video corresponds to merging said main video with said at least one lighting variation picture.

According to another aspect of the present principles, an apparatus for interactive video playback is disclosed. Such an apparatus comprises:
- means for playing back a main video comprising at least one interaction element,
- means for receiving a user interaction associated to said at least one interaction element,
- means for determining an interaction video sequence or a lighting variation picture associated to said at least one interaction element,
- means for adapting said main video using said interaction video sequence or said lighting variation picture, to deliver a composited interactive video,
- means for playing back said composited interactive video.

According to an embodiment of the present principles, the apparatus for interactive video playback further comprises a memory for storing said main video and said interaction video sequence or said lighting variation picture.

According to another aspect of the present principles, a method for creating an interactive video is disclosed, comprising:
- storing a main video and at least one interaction video sequence or lighting variation picture, each interaction video sequence or lighting variation picture being associated to an interaction element represented in the main video,
- determining, for each interaction element represented in the main video, at least one mask picture, indicating the location in the main video where the interaction video sequence or lighting variation picture applies,
- determining an interaction mask picture for the main video from the at least one mask picture associated to each interaction element, said interaction mask picture for the main video comprising an indication of the interaction video sequence or lighting variation picture associated to the interaction element.

According to another aspect of the present principles, an apparatus for creating an interactive video is disclosed, comprising:
- means for storing a main video and at least one interaction video sequence or lighting variation picture, each interaction video sequence or lighting variation picture being associated to an interaction element represented in the main video,
- means for determining, for each interaction element represented in the main video, at least one mask picture, indicating the location in the main video where the interaction video sequence or lighting variation picture applies,
- means for determining an interaction mask picture for the main video from the at least one mask picture associated to each interaction element, said interaction mask picture for the main video comprising an indication of the interaction video sequence or lighting variation picture associated to the interaction element.

According to one implementation, the different steps of the methods disclosed herein are implemented by one or more software programs or software module programs comprising software instructions intended for execution by a data processor of an apparatus for interactive video playback or for creating interactive video, these software instructions being designed to command the execution of the different steps of the methods according to the present principles.

A computer program is also disclosed that is capable of being executed by a computer or by a data processor, this program comprising instructions to command the execution of the steps of a method for interactive video playback or of the steps of a method for creating interactive video as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.

Again, the information carrier can be a transmissible carrier such as an electrical or optical signal which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more subprograms of a program or more generally to any element of a program or a piece of software capable of implementing a function or a set of functions as described here below for the module concerned. Such a software component is executed by a data processor of a physical entity (terminal, server, etc) and is capable of accessing hardware resources of this physical entity (memories, recording media, communications buses, input/output electronic boards, user interfaces, etc).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

### 4. Brief description of the drawings

- Figure 1 illustrates a general example method for creation and restitution of interactive videos, according to an embodiment of the present principle.
- Figure 2 illustrates an example method for creating interactive videos according to an embodiment of the present principle,
- Figures 3A-3G illustrates examples of main video, interaction video sequences and interaction masks produced by the example method disclosed in figure 2,
- Figure 4 illustrates an example method for interactive video playback according to an embodiment of the present principle,
- Figures 5A-5C illustrates examples of main video, interaction video sequences and interaction masks produced by the example method disclosed in figure 4,
- Figure 6 illustrates an example apparatus for creating interactive videos according to an embodiment of the present principle,
- Figure 7 illustrates an example apparatus for interactive video playback according to an embodiment of the present principle.

### 5. Description of embodiments

A method for interactive video playback is disclosed herein. Such a method allows to bring high fidelity interaction using only video media to a user without any other support like 3D meshes or depth map. For example, the user is given the possibility to interact with elements represented in the video or the possibility to play with the scene lighting. Thus, the user immersion inside the video media is improved.

For example, a user watching an interactive video can fully control the opening of a door through an interaction. The user is able to fasten the opening as well as slowing it down or even rewind it (i.e. closing the door) the way he/she wants.

The present principle applies to any kind of interactive videos. More particularly, it takes on full significance with 360 (stereo or not) videos for VR (for Virtual Reality) experiences. Not using any 3D data allows the interactive video playback to be lighter, i.e., less complex than other approaches that use 3D information. Thus, the present principle is compatible with low-resources device, such a smartphone, a tablet, etc...

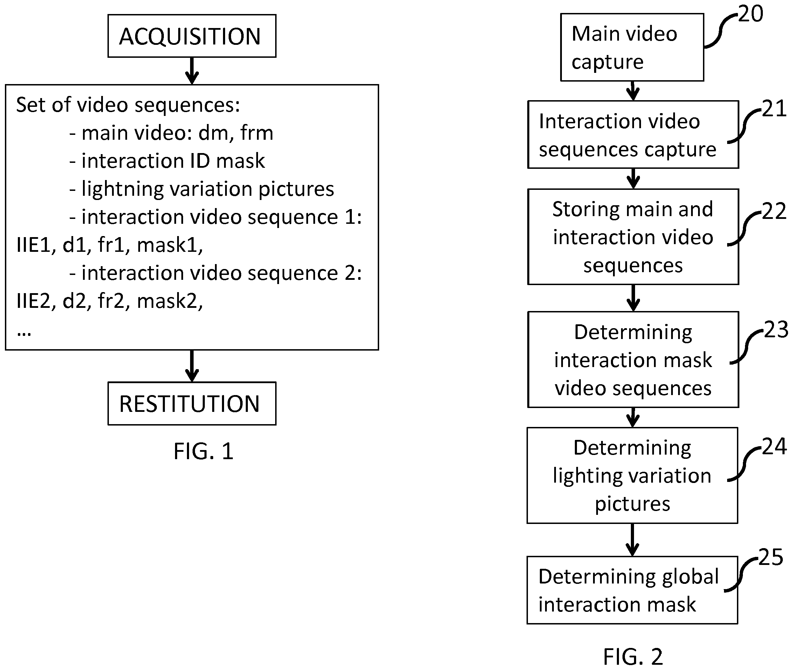

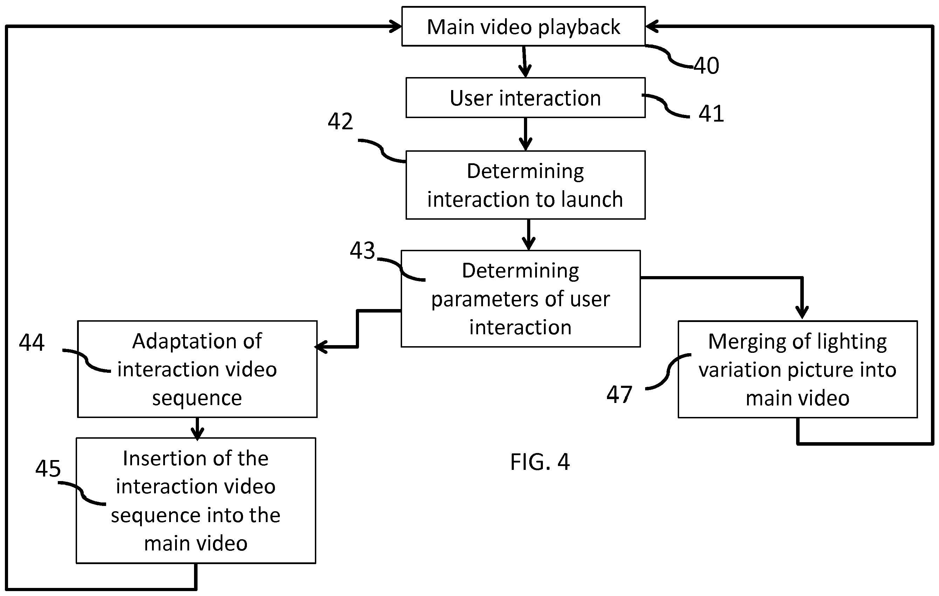

As illustrated in figure 1, the present principles comprise two main processes: an acquisition process and a restitution process, which will be disclosed below in reference with figures 2 and 4.

The acquisition process allows to acquire all the necessary video sequences and lighting variation pictures associated to the interaction elements represented in a main video and corresponding metadata to provide interaction to a user during playback of an interactive video.

After the acquisition process, a server or a local memory stores a full set of videos, lighting variation pictures and metadata as follows:
- a main video, in a basic state, the main video is the one where takes place the main stream action. It is the video the user can interact with. Such a main video is associated with at least duration (dm) and a frame rate (frm).
- A set of interaction video sequences, each being associated to an interaction element represented in the main video. Each interaction video sequence is representative of an action applied to the interaction element to which the interaction video sequence is associated. Each interaction video sequence (for instance "interaction video sequence 1" in figure 1) is also associated to metadata such as:
   - An identification of the interaction element (IIE1), also represented in the main video to which the interaction video sequence applies, for instance here the interaction element is the door on the main video;
   - A frame rate (fr1);
   - A duration (d1);
   - A mask (mask1) indicating the location, in the main video, where the interaction video sequence should be inserted;
   - Each interaction video sequence may also be associated to a start and end time indicating the instants in the main video between which the interaction video sequence can be played back.
- Lighting variation pictures for each interactive light represented in the main video, such ligthing variation pictures contains the lighting offset between the « basic state » lighting of the main video and the lighting state of the main video with the concerned light turned on.
- An interaction ID mask which indicates where are interaction zones in the main video and which interaction video sequences are linked to those interaction zones.

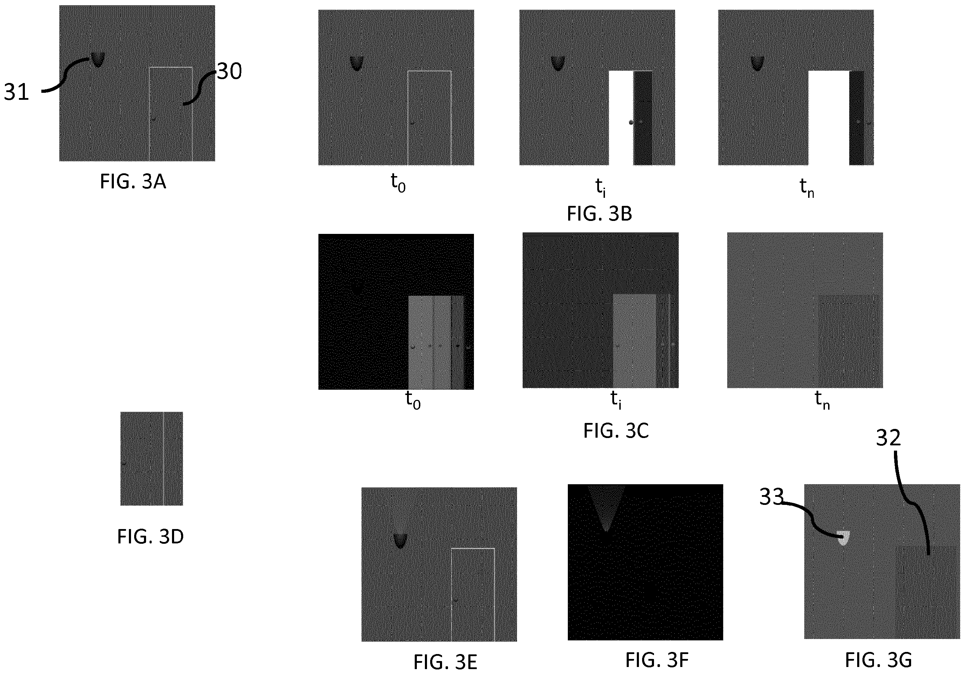

The acquisition process is now disclosed in relation with figures 2 and 3A-G.

In step 20, the main video is captured. The main video sequence is shot in a "basic state". Here, "basic state" for lighting means that the scene is illuminated only by non-interactive light sources, and interactive light sources are turned off during the shooting. The "basic state" shows the scene with all interactive-zones in a rest position without any animation, the interactive parts of the video will be added later. An example of a basic state of the main video is illustrated in figure 3A showing two interaction elements: a door (30) in a rest position, in the example given here the door is closed, and an interactive light (31) that is turned off.

In step 21, all the possible interactions are shot for the same scene, one interaction at a time. In the case of the example of figure 3A, an interaction video sequence is shot for allowing an interaction with the door. For example, if a user can open the door in the main video, the opening of this door is shot. At this step it is important to shoot the interaction video sequences with the same cameras parameters and positions as in step 20 when the main video was shot in the basic state. Figure 3B illustrates an example of three pictures (t₀, tᵢ and tₙ) of the output interaction video sequence for the opening of the door.

Once all the interaction video sequences and the main video have been shot, they are stored in memory at step 22.

In step 23, a mask is determined for each interaction video sequence. Such a mask indicates the location of the corresponding video in the "basic state" of the main video. Figure 3C illustrates the corresponding masks for the three pictures of the interaction video sequence illustrated with figure 3B, in the example of the door opening.

Such masks can be defined manually with painting or compositing software or can be computed automatically with video processing by analyzing differences between the "basic state" main video and the interaction video sequence. A mask picture is then obtained for each interaction video sequence by integrating each mask defined at each picture of the interaction video sequence. Such a mask is illustrated on picture tₙ of figure 3C.

Optionally, once the mask picture of an interaction video sequence is obtained at step 23, the interactive video sequence size can be reduced. This optimization is done by cropping parts of the interaction video sequence that lie outside the mask zone and allow to optimize memory resources. Such a cropping is illustrated on figure 3D for a picture of the interaction video sequence illustrated on figure 3B.

In step 24, when the scene of the main video comprises interactive lights that the user watching the main video can turned on or off, lighting variation pictures associated to each light are determined. For each interactive light, the interaction video sequence is shot with the interactive light turned on, with the same cameras parameters and positions as in step 20. Then, the differences between the new state (with light on) and the basic state of the main video are computed and stored in a lighting variation picture.

Figure 3E illustrates the state of the main video with the interactive light (31) turned on. Figure 3F illustrates the lighting variation picture resulting from the computation of the differences between the states illustrated on figures 3E and 3A (basic state of the main video).

In step 25, a global interaction mask picture is determined from the mask pictures determined for each interaction video sequence and from the lighting variation pictures.

For each interactive light, the lighting variation picture is used to indicate in the global interaction mask picture the interaction areas for the interactive light sources. For an interactive light, in the areas of the main video where the lighting variation picture associated to the interactive light indicates a non-zero value, meaning an impact of the interactive light in these areas, the global interaction mask picture comprises an identifier of the interactive light.

For an interaction video sequence representing an action applied to an interaction element, the global interaction mask picture comprises an indicator of the interaction video sequence.

A location in the global interaction mask may comprise several indicators if an interactive light interacts in a same area as an interaction element associated to an interaction video sequence or if multiple interactive lights interact in a same area or if multiple interaction elements interact in a same area. A resulting global interaction mask picture is illustrated on figure 3G wherein the grey area 32 indicates the area wherein the interaction element (door 30) interacts, i.e. the area where the interaction video sequence associated to the interaction element shall be inserted in the main video. On figure 3G, the lighter grey area 33 indicates the area wherein the interactive light (31) interacts, i.e. the area where the user can interact to turn on and off the interactive light.

Figure 4 discloses an example method for playing back an interactive video according to an embodiment of the present disclosure. Such a method is for instance implemented by a movie player adapted for allowing interactive video.

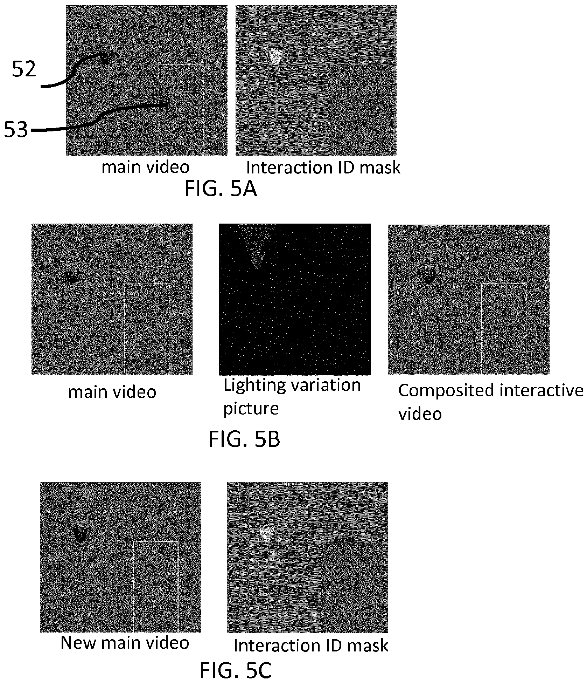

In step 40, a main video is played back to a user. Such a main video comprises at least one interaction element. For instance, on figure 5A, the main video is illustrated with two interactive elements: a door (51) and an interactive light (52). During play back of the main video, the movie player also stores an interaction ID mask picture indicating the interaction areas in the main video.

During play back of the main video, the user is able to interact with the interaction elements represented in the video. For instance, the interaction elements (51, 52) can be highlighted in the main video or a voice signal can be produced to indicate the user the possibility of interactions in the main video.

In step 41, a user interaction is received by the movie player. Such a user interaction is associated to an interaction element of the main video. According to the present principle, the user is able to dynamically drive the interactions in the main video and not only launch punctual events.

For instance, in the example of the door opening, the user must be able to interact as he wants with the door: open it a little, close it, modify the speed of the door movement, etc....To do this, the user must use some interaction device that provides more interaction patterns than a single click. Such an interaction device could for example be a mouse (e.g. the time of the click defines the time of interaction and the movement of the mouse define the animation speed of the interaction), or controllers from Head Mounted Devices (HMD) such as for instance a tactile pad from the HMD named GearVR from Samsung, or the Vive from HTC or Oculus Rift, or cameras or depth camera to detect movement. To dynamically drive the interactions in the main video, other solutions are also possible such as gaze detection in which when a user stares at a point in the video, corresponding interaction is triggered, or speech recognition in which the user uses vocal commands to trigger the interaction.,

According to an embodiment, receiving the user interaction comprises capturing a movement of the user using the interaction device. As explained above, such a movement could be a movement of the mouse the user is using, movement of the hand of the user, movement of the head, a user touch on a tactile pad, etc...

In step 42, the movie player determines which interaction should be launched according to the user interaction. For instance, each interaction is linked to a specific user's movement. Or the movie player determines a specific motion of the user interaction in the main video. If the user uses a mouse cursor or tactile pad, the movie player determines the position where the movement of the mouse cursor or the user touch began in the main video and uses the interaction ID mask to determine the target interaction video sequence or lighting variation picture. In another embodiment, the movie player can use information given by a Head Mounted Device such as gaze control or head orientation to determine the interaction element the user wants to interact with.

If the interaction element the user wants to interact with is an interactive light, for instance the interactive light 52 of figure 5A, the movie player selects the variation lighting picture associated to the interactive light. If the interaction element the user wants to interact with in the main video is an object represented in the main video, for instance the door 51 illustrated in figure 5A, the movie player selects the interaction video sequence associated to this interaction element.

In step 43, the movie player determines at least one parameter of the user interaction. Such a parameter is associated to the movement of the user captured by the interaction device. For instance, such a parameter can be any parameter among: the speed of the movement of the user, the direction of the movement, the amplitude of the movement, ...

For example, the speed of the movement of the user is determined by the speed of the cursor or user touch displacement. The amplitude of the movement is determined by the amplitude of the displacement of the cursor or user touch displacement. For example, for the door opening, the door is interpreted as being opened entirely if the displacement is equal or larger than a predetermined value, called maximal displacement. Such a predetermined value can be previously stored as a metadata with the interaction video sequence. Then, a percentage of the action (door opening) can be computed in function of the cursor or user touch amplitude displacement and the maximal displacement value.

The direction of the movement is determined by the direction of the displacement of the cursor or user touch displacement. For instance, for a movement associated to an interaction element such as the door 51, a movement of the user that goes away from the user is interpreted as an opening action of the door and a movement of the user that gets closer to the user is interpreted as a closing action of the door.

Such parameters of the user interaction are then taken into account when generating the composited interactive video comprising the interaction.

Thanks to the movement capture at step 41, the user will be able to control the interaction video's flow and thus will have the sensation to really play with the interactive video. This user control can thus affect the reading speed of the interactive videos so that it is possible to read the video faster or slower, to pause it or even to play it backwards. In the door example, if the user wants to quickly open the door, he will do a wide and fast movement, and the resulting interactive video should play the full opening video sequence in a very fast way. If the user wants to slowly half-open the door, he will do a slow and short movement and the resulting interactive video should play a slowly part of the opening video sequence corresponding to the displacement of the user's movement. If the user wants to slowly half-open the door and quickly close it, he will start by a slow and short movement in the opening direction and then do a quick and short movement in the opposite direction. The resulting interaction video should start to play the opening video sequence slowly and then replayed it again backwards in a faster way.

At step 41, if the user interacts with the interactive light (52), then the light must be turned on. The movie player then passes to step 47 in which the movie player performs an additive merge between the basic state of the main video that is currently played back, and the lighting variation picture associated to the interactive light. Such step is illustrated on figure 5B, which shows the resulting composited interactive video wherein the interactive light 52 is turned on.

In the case where the user has turned on more than one interactive light, the movie player performs an additive merge between the current state of the main video and the corresponding lighting variation picture for each light the user has turned on.

The main video that is currently played back is thus in the new video state illustrated on figure 5C.

The playback of the main video is continued until the main video ended or the movie player receives a new user interaction.

For instance, if at step 41, the user interacts with the door (51) in the main video, for instance by a movement of indicating a door opening, the movie player should play the opening door video sequence. Such playback of the opening door video sequence should be coherent with the user movement. More particularly, coherency between speed, direction and amplitude of the movement of the user should be kept when playing the opening door video sequence.

At step 44, the movie player then adapts the interaction video sequence according to the parameters determined at step 43. For instance, for adapting the interaction video sequence according to the speed of the user movement, the frame rate of the interaction video sequence is adapted. For instance, a speed of the door opening in the interaction video sequence at the time the interaction is shot corresponds to a movement of the door of 5cm/s, corresponding to 24fps (frame per second). When the interaction of the door opening is triggered in the playback of the video, the capturing device or the player determines the speed of the user's interaction, for instance 10cm/s, and the player adapts the framerate of the interactive video sequence that should be played to be 48fps.ln case, the user interacts with the door with a single click, the framerate of the interactive video sequence is not adapted and the framerate of 24fps is kept.

For adapting the interaction video sequence according to the direction of the user movement, the movie player determines the direction of the action performed in the interaction video sequence, for example using a metadata associated to the interaction video sequence. In the case of the door opening, such a metadata may indicate an opening. If the direction of the user movement is the same direction as the direction indicated in the metadata, the interaction video sequence does not need to be adapted according to this parameter. Otherwise, the direction of the user movement is in the opposite direction as the direction specified in the metadata, the interaction video sequence is adapted so that the interaction video sequence is played reversely, when the main video is played forwardly.

For adapting the interaction video sequence according to the amplitude of the movement of the user, the duration of the interaction video sequence is adapted in function of the amplitude of the movement. For instance, if the amplitude is determined to be 50% of the whole amplitude allowed for the action of the door opening, then only the first 50% of the interaction video sequence of the door opening is used. In other word, the duration of the interaction video sequence is adapted so as to correspond with the amplitude of the user movement.

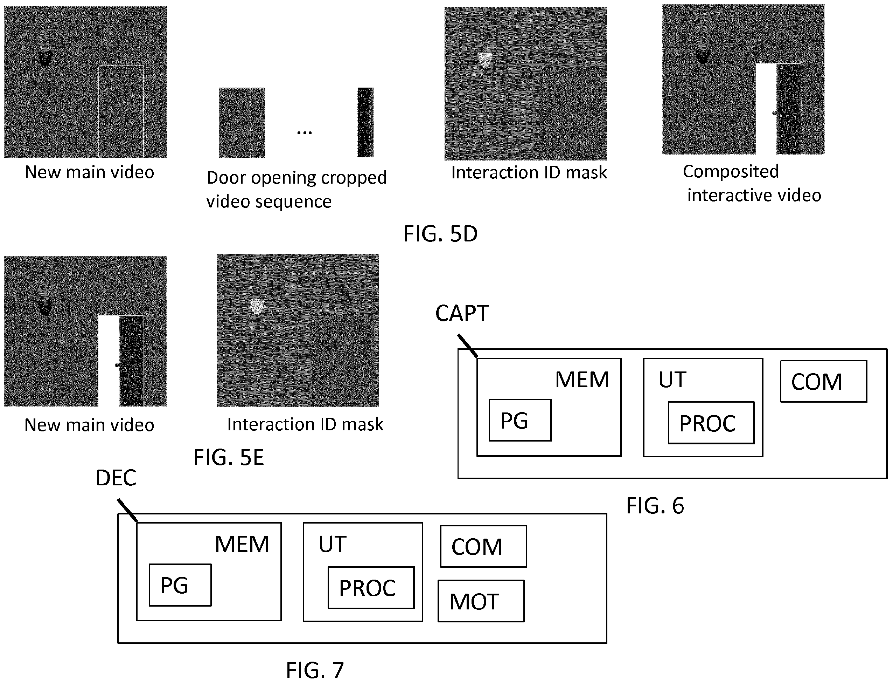

In step 45, the adapted interaction video sequence is inserted into the main video in the current state. This is illustrated in figure 5D. The actual state of the main video and the cropped opening door video sequence are composited to deliver a new composited video displayed to the user. Such compositing is driven by the interaction ID mask which indicates to the movie player where the cropped opening video sequence is to be inserted inside the main video.

Figure 5E illustrates the resulting composited interactive video wherein the interactive light 52 is turned on and the door 51 is opened and the corresponding interaction ID mask of the main video. The main video that is currently played back is thus in the new video state illustrated on figure 5E.

The playback of the main video in this new state is continued until the main video ended or the movie player receives a new user interaction.

According to an embodiment of the present disclosure, the movie player can store in a local memory the main video that is currently played back and all the interaction video sequences and lighting interaction pictures for generating the interactive video when needed. According to another embodiment of the present disclosure, if the playback device presents some memory limitation, the movie player can store in a local memory only the main video that is currently played back and requests to a server the interaction video sequences and/or lighting interaction pictures when needed. In that case, the movie player only receives the interaction video sequences and/or lighting interaction pictures relating to the interaction desired by the user watching the video.

The present principle has been disclosed below in the case of static light sources, i.e. which only need one picture to store the lighting behavior of the source light. For such static light source, there is no temporal evolution.

However, the present principle also applies when the light source behavior evolves over time. For instance, the intensity of the light may change linearly. This case can be managed using the lighting interaction picture disclosed above and weighting the lighting variation picture before merging the lighting variation picture with the main video.

In the case where the light sources are moving in the main video or if the shapes of the light sources have no temporal stability, lighting variation video sequence have to be used for storing such temporal evolutions. In that case, such light sources are processed as any interaction element of the main video and an interaction video sequence has to be shot in a same manner as in step 21 of figure 2, for storing the behavior of these light sources inside the scene.

Figure 6 illustrates an example apparatus CAPT for creating interactive videos according to an embodiment of the present principle. Such an apparatus is configured to implement the method for creating interactive videos according to the present principles which has been described here above in reference with figure 2. In the example shown in figure 6, the apparatus comprises a processing unit PROC equipped for example with a processor and driven by a computer program PG stored in a memory MEM and implementing the method for creating interactive videos according to the present principles.

At initialization, the code instructions of the computer program PG are for example loaded in a local memory of the processing unit and executed by the processor of the processing unit PROC. The processor of the processing unit PROC implements the steps of the method for creating interactive videos which has been described here above, according to the instructions of the computer program PG.

The memory MEM is configured for storing the main video, the interaction video sequences, lighting variation pictures and metadata generated by the processor.

Optionally, the apparatus CAPT comprises a communications unit COM to transmit the data generated by the processor to a movie player for interactive video restitution or for storing on a distant server.

Figure 7 illustrates an example apparatus DEC for interactive video playback according to an embodiment of the present principle. Such an apparatus is configured to implement the method for interactive video playback according to the present principles which has been described here above in reference with figure 4. In the example shown in figure 7, the apparatus comprises a processing unit PROC equipped for example with a processor and driven by a computer program PG stored in a memory MEM and implementing the method for interactive video playback according to the present principles.

At initialization, the code instructions of the computer program PG are for example loaded in a local memory of the processing unit and executed by the processor of the processing unit PROC. The processor of the processing unit PROC implements the steps of the method for creating interactive videos which has been described here above, according to the instructions of the computer program PG.

The apparatus DEC also comprises an interaction device MOT allowing a user to interact with element represented in a video played back by the apparatus.

According to an embodiment, the main video, the interaction video sequences, lighting variation pictures and metadata are stored on the memory MEM.

Optionally, the apparatus DEC comprises a communications unit COM to receive the main video, the interaction video sequences, lighting variation pictures and metadata generated from a distant server.

The apparatus DEC is configured for video playback, thus it classically comprises means for outputting a video, such as a visual and sound restitution means, for instance a screen and loud speakers. The apparatus DEC may be developed for a Head Mounted Device or for Virtual Reality, or in a smartphone, or tablets, TV, ....

The apparatus DEC may be a movie player implemented using hardware or software modules.

## Claims

1. A method for interactive video playback comprising:
- playing back a main video comprising at least one interaction element,
- during playback of said main video:
• receiving a user interaction associated to said at least one interaction element,
• determining an interaction video sequence or a lighting variation picture associated to said at least one interaction element,
• adapting said main video using said interaction video sequence or said lighting variation picture, to deliver a composited interactive video,
• playing back said composited interactive video.

2. The method of claim 1, wherein receiving a user interaction comprises capturing a movement of the user using an interaction device.

3. The method of claim 2, further comprising determining at least one parameter associated to the captured movement of the user, said at least one parameter being taken into account when adapting said main video.

4. The method of claim 3, wherein determining at least one parameter comprises determining a speed of the captured movement of the user, and wherein adapting said main video comprises adapting a frame rate of said interaction video sequence according to said speed of the captured movement of the user and inserting said adapted interaction video sequence into said main video.

5. The method of claim 3, wherein said at least one interaction element is associated with an action, and wherein determining at least one parameter associated to the captured movement of the user comprises determining, from the captured movement, a direction of the action applied to said at least one interaction element, and wherein adapting said main video comprises:
- if the determined direction corresponds to a direction opposite to the direction of the action represented in said interaction video sequence, inserting said interaction video sequence into said main video so that said interaction video sequence is played back reversely when said main video is played back forwardly.

6. The method of claim 3, wherein said at least one interaction element is associated with an action, wherein determining at least one parameter associated to the captured movement of the user comprises determining an amplitude of the captured movement, and wherein adapting said main video comprises adapting a duration of said interaction video sequence according to the amplitude of said captured movement and inserting said adapted interaction video sequence into said main video.

7. The method of claim 1, wherein said interaction video sequence or said lighting variation picture is received from a distant server or retrieved from a local memory.

8. The method of claim 1, wherein when said at least one interaction element is a light source, adapting said main video corresponds to merging said main video with said at least one lighting variation picture.

9. An apparatus for interactive video playback comprising:
- means for playing back a main video comprising at least one interaction element,
- means for receiving a user interaction associated to said at least one interaction element,
- means for determining an interaction video sequence or a lighting variation picture associated to said at least one interaction element,
- means for adapting said main video using said interaction video sequence or said lighting variation picture, to deliver a composited interactive video,
- means for playing back said composited interactive video.

10. The apparatus of claim 9, further comprising a memory for storing said main video and said interaction video sequence or said lighting variation picture.

11. A method for creating an interactive video comprising:
- storing a main video and at least one interaction video sequence or lighting variation picture, each interaction video sequence or lighting variation picture being associated to an interaction element represented in the main video,
- determining, for each interaction element represented in the main video, at least one mask picture, indicating the location in the main video where the interaction video sequence or lighting variation picture applies,
- determining an interaction mask picture for the main video from the at least one mask picture associated to each interaction element, said interaction mask picture for the main video comprising an indication of the interaction video sequence or lighting variation picture associated to the interaction element.

12. An apparatus for creating an interactive video comprising:
- means for storing a main video and at least one interaction video sequence or lighting variation picture, each interaction video sequence or lighting variation picture being associated to an interaction element represented in the main video,
- means for determining, for each interaction element represented in the main video, at least one mask picture, indicating the location in the main video where the interaction video sequence or lighting variation picture applies,
- means for determining an interaction mask picture for the main video from the at least one mask picture associated to each interaction element, said interaction mask picture for the main video comprising an indication of the interaction video sequence or lighting variation picture associated to the interaction element.
